# FASCICULE DE BREVET EUROPEEN

(11) **EP 0 930 014 B1**
(45) Date de publication et mention de la délivrance du brevet: **29.10.2003**
(21) Numéro de dépôt: 98403083.3
(22) Date de dépôt: 08.12.1998
(51) Int. Cl.: A21D 13/08, A21D 8/02

(54) **Pâte à gâteau avec matière grasse ajoutée et son procédé de preparation**
Fetthaltiger Gebäckteig und Verfahren zu seiner Herstellung
Cake dough containing fat and method for its production

(30) Priorité: 11.12.1997 FR 9715698
(43) Date de publication de la demande: 21.07.1999
(73) Titulaire: LU France, 91130 Ris Orangis (FR)
(72) Inventeur: Pillard, Laurent, 91170 Viry Chatillon (FR); Belouin, François, 91590 Cerny (FR)
(74) Mandataire: Grosset-Fournier, Chantal Catherine

(56) Documents cités:
- GB-A- 970 715
- US-A- 3 505 079
- VOLLMER R: "Die Bedeutung der Aufschlagemulgatoren für die Qualität von Biskuit- und Sandmassen." BROT & BACKWAREN, vol. 33, no. 7/8, 1985, pages 171-174, XP002079571

## Description

La présente invention concerne une nouvelle pâte à gâteau avec matière grasse ajoutée, susceptible d'être obtenue par foisonnement.

La présente invention concerne également un procédé pour préparer une pâte foisonnée avec matière grasse ajoutée, destinée notamment à la confection de génoises, biscuits à la cuiller, boudoirs etc...

La présente invention concerne également un dispositif pour la mise en oeuvre de ce procédé.

Pour préparer une pâte foisonnée du genre indiqué au début, il est connu de préparer un mélange de tous les ingrédients, qui comprennent typiquement des oeufs, de la farine, du sucre et de la matière grasse ajoutée, telle que de l'huile de colza, et de soumettre ce mélange à l'action d'un appareil appelé "foisonneur" qui provoque une aération du mélange par voie mécanique. On obtient ainsi une pâte incorporant des bulles gazeuses sans avoir nécessairement recours à l'action chimique de levures.

Les mélanges incorporant de la matière grasse ajoutée offrent une assez grande résistance au foisonnement. Il est connu de compenser cette résistance au moyen d'émulsifiants que l'on incorpore au mélange avant le foisonnement.

Le foisonnement correspond sensiblement à une étape d'agitation à fort cisaillement, obtenue par l'action d'un rotor tournant à vitesse élevée.

Le procédé connu fournit, après cuisson dans certaines conditions, une pâte dont la texture est perçue comme pâteuse et peu fondante. On pourrait songer à améliorer le caractère "fondant" de la pâte obtenue, et en diminuer le caractère pâteux en augmentant la proportion de matière grasse ajoutée dans le mélange initial. Mais ceci est désavantageux du point de vue diététique. En outre, le mélange initial s'en trouvera d'autant plus résistant à l'action de foisonnement et il faudra donc augmenter de manière concomitante la proportion d'émulsifiants pour éviter l'accroissement de la densité du produit obtenu.

Le but de la présente invention est de sortir de ce dilemme en proposant un procédé en continu et un dispositif qui permettent de préparer une pâte foisonnée pouvant être légère, aérée et fondante avec une proportion de matière grasse pouvant être réduite et un taux d'émulsifiant pouvant être diminué, voir annulé.

Le document *VOLLMER R : «Die Bedeutung der Aufschlagemulgatoren für die Qualität von Biskuit- und Sandmassen. » BROT UND BACKWAREN, vol .33, no. 7*/*8, 1985, pages 171-174, XP002079571* traite de la place essentielle des émulsifiants foisonnants dans la fabrication de préparations biscuitées et sablées. Ce document ne concerne que des préparations de pâtes à gâteau grasses.

Le brevet GB-A-970 715 concerne des préparations sèches pour génoise, c'est à dire des pré-mélanges pour la préparation de gâteaux. L'utilisation de ces pré-mélanges est telle que l'on additionne les matières grasses avec la farine, la levure et le sucre après avoir battu les blancs en neige.

Suivant l'invention, le procédé pour préparer en continu une pâte foisonnée, avec matière grasse ajoutée, comprenant une étape de foisonnement appliquée à un mélange des ingrédients de la pâte, est caractérisé en ce qu'après l'étape de foisonnement on procède à une étape d'intégration de la matière grasse ajoutée.

Il a en effet été remarqué selon l'invention que l'étape de foisonnement fractionne la matière grasse en globules de taille extrêmement faible, avec un diamètre de l'ordre du micron. Lors de la dégustation du produit, ces particules sont trop petites pour libérer de la matière grasse dans la bouche du consommateur. Ceci semble expliquer la perte de fondant et la sensation de pâteux qui est ressentie même avec une proportion de matière grasse ajoutée relativement élevée.

Selon l'invention, on remédie à cet inconvénient en intégrant la matière grasse ajoutée dans une étape qui suit le foisonnement.

On peut ainsi intégrer la matière grasse ajoutée en prenant soin de la fractionner beaucoup moins que lorsqu'elle subit l'étape de foisonnement.

On ménage ainsi dans le produit fini la présence de globules de matière grasse ajoutée de volume plus gros que ceux présents dans la pâte obtenue par les procédés classiques. La sensation de fondant est nettement améliorée lors de la dégustation.

En outre, notamment si l'on a considérablement réduit la matière grasse ajoutée dans le mélange initial, comme cela est préféré selon l'invention, les émulsifiants ne sont plus nécessaires pour mener à bien l'étape de foisonnement. Même si l'on a totalement supprimé les émulsifiants, la pâte foisonnée et le produit cuit obtenu peuvent être nettement moins denses qu'avec le procédé classique. On pourra néanmoins, dans le cadre de l'invention, prévoir une certaine proportion d'émulsifiants pour améliorer la conservation du produit.

L'un des paramètres qui caractérise une action d'agitation ou de mélange d'un fluide est le cisaillement, que l'on calcule en divisant la vitesse de circulation du fluide par le diamètre hydraulique. On considère que le cisaillement qui accompagne l'étape de foisonnement est typiquement de 800 à 1500s⁻¹.

De préférence, le cisaillement impliqué par l'étape d'intégration de la matière grasse ajoutée est très inférieur à celui impliqué par l'étape de foisonnement, et se trouve avantageusement compris entre 20s⁻¹ et 100s⁻¹, en étant de préférence de 50s⁻¹.

Un cisaillement inférieur à 20s⁻¹ n'assure généralement pas une répartition homogène de la matière grasse ajoutée dans le mélange préalablement foisonné. En particulier certains mélangeurs connus, qui ont simplement pour effet de donner au fluide un mouvement hélicoïdal dans un conduit, se sont avérés peu efficaces pour la mise en oeuvre de l'invention.

Un cisaillement supérieur à 100s⁻¹ tend à disperser la matière grasse ajoutée en globules dont le volume est trop faible pour être optimale au regard des qualités organoleptiques recherchées, en particulier le caractère "fondant" et le caractère « aéré » recherchés.

L'invention propose donc un procédé de préparation de pâte à gâteau dans lequel les ingrédients sont mélangés en continu, ceci permettant au procédé d'être parfaitement contrôlé, donc répétable. La maîtrise du cisaillement en continu grâce au procédé permet d'appliquer un travail mécanique juste suffisant au mélange nécessaire des ingrédients avec une parfaite régularité.

Le procédé en continu, présente donc un avantage important par rapport au procédé discontinu, également appelé procédé par "batch", qui est une opération délicate et difficile à maîtriser et qui peut conduire à une irrégularité entre les différents produits finis résultant de la conduite d'une production. Par ailleurs, un procédé discontinu est limitant dans un cadre industriel.

Le procédé de l'invention se caractérise donc par l'un au moins des trois paramètres suivants :
- son caractère continu,
- le faible taux de cisaillement par rapport aux procédés de l'art antérieur,
- une taille de particules supérieure à celle résultant de la mise en oeuvre des procédés de l'art antérieur.

Pour l'intégration de la matière grasse ajoutée, l'utilisation d'un mélangeur statique s'est avérée particulièrement avantageuse.

Il a en particulier été trouvé qu'un mélangeur statique permettait, en soumettant le produit à une pression acceptable pour la préservation de sa qualité, d'assurer une bonne répartition de la matière grasse ajoutée dans le mélange foisonné sous la forme de globules dont le diamètre moyen est de préférence compris de 5 à 25 µm.

La quantité de matière grasse ajoutée est de préférence sensiblement comprise de 2 à 20%, notamment de 2 à 10 % du poids total de la pâte crue issue de l'étape d'intégration.

Lorsque la quantité de matière grasse ajoutée est comprise de 2 % à 20%, notamment de 2 à 10 %, ce qui correspond à la teneur des produits connus, les qualités organoleptiques du produit obtenu sont améliorées. En particulier, la sensation de fondant est significativement accrue. En outre, la densité du produit peut être plus faible, grâce à une meilleure aération pendant l'étape de foisonnement, même en l'absence d'émulsifiants.

Selon une version avantageuse du procédé, la quantité de matière grasse est ajoutée en quantité inférieure à 15 %, et notament inférieure ou égale à 10 %, et plus particulièrement en quantité de 2 à 10 %, et notamment de 2 à 8 %.

Selon une version particulièrement avantageuse du procédé, la quantité de matière grasse ajoutée est comprise de 5 à 10%. Dans ce cas, le procédé permet de réaliser un produit plus diététique avec des qualités organoleptiques au moins équivalentes à celles des produits antérieurs.

Quelle que soit la teneur en matière grasse ajoutée, le procédé selon l'invention permet de choisir dans une large mesure le degré d'aération obtenu par l'étape de foisonnement, par simple réglage du débit d'air que l'on injecte dans le mélange pendant cette étape. De préférence, on règle l'aération de façon que la densité de la pâte crue obtenue après l'étape d'intégration soit comprise de 400 à 800 kg/m³.

Suivant un autre aspect de l'invention, le dispositif pour la fabrication d'une pâte foisonnée par mise en oeuvre du procédé selon le premier aspect, comprenant un foisonneur monté entre une entrée de mélange et une sortie de pâte crue, est caractérisé en ce qu'il comprend un mélangeur à cisaillement modéré monté en aval du foisonneur, et un dispositif d'injection de matière grasse débouchant entre le foisonneur et le mélangeur.

De préférence, le mélangeur est de type statique, et comprend de préférence, dans le trajet de la pâte, des organes qui subdivisent le flux de pâte en flux partiels, soumettent des flux voisins à des déviations différentes, et recombinent des flux partiels initialement distants l'un de l'autre. Un tel mélangeur est particulièrement approprié pour réaliser un mélange forcé de la pâte foisonnée d'une part et de la matière grasse ajoutée d'autre part. En fonction du nombre de subdivisions et de recombinaisons de flux partiels que l'on fait subir au mélange le long de son trajet à travers le mélangeur, on peut doser l'action de mélange de manière à obtenir pour la matière grasse ajoutée la taille de globules voulue. Cela s'est avéré possible sans que la pression à appliquer en amont du mélangeur statique atteigne une valeur prohibitive.

Pour un mélangeur de 50mm de diamètre intérieur, le nombre de divisions de flux défini par le mélangeur peut être compris entre 20 et 300 divisions, de préférence entre 100 et 200 divisions.

De préférence, le mélangeur a une longueur de 600mm, un diamètre de 50mm et définit 180 subdivisions de flux pour un débit de 200kg/h. Ce débit correspond à une vitesse de 4cm/s pour une densité de 700kg/m³ et de 5cm/s pour une densité de 550 kg/m³.

Pour des débits différents, il est préféré de maintenir la vitesse de circulation sensiblement la même, entre 0,5 et 20cm/s, de préférence entre 2 et 10cm/s, de manière très préférée entre 3 et 5cm/s. Ceci conduit à faire varier la section intérieure du mélangeur statique de manière proportionnelle au débit.

Le nombre de subdivisions de flux définies par le mélangeur doit, en fonction d'essais, être légèrement augmenté lorsque le débit et donc la section augmentent, de façon que des poches de matière grasse initiales susceptibles d'être plus grosses à l'entrée du mélangeur statique de plus grand diamètre soient ramenées à la taille de globules voulue à la sortie du mélangeur.

Par "légèrement", on entend notamment "moins que proportionnellement". Inversement, pour un débit plus faible, le nombre de subdivisions de flux pourra être "légèrement" réduit.

Dans ce qui précède, les subdivisions définies par le mélangeur sont comptées de manière additive. Par exemple, deux éléments successifs produisant 15 subdivisions chacun sont considérés comme opérant 30 subdivisions en tout.

Les indications chiffrées qui précèdent ont permis, en cours d'essais, de respecter une pression maximum de quelques bars, typiquement 3 bars, à l'entrée du mélangeur, ainsi qu'un cisaillement situé dans les fourchettes indiquées plus haut.

La pompe située en amont du foisonneur peut suffire à fournir la pression nécessaire à l'entrée du mélangeur statique. Si toutefois on craint qu'il en résulte une pression trop élevée dans le foisonneur, on peut placer une pompe de reprise entre le foisonneur et l'orifice d'injection d'huile, ou entre l'orifice d'injection d'huile et l'entrée du mélangeur statique.

Cette pompe peut être activée de manière variable par une boucle de régulation tendant à maintenir une pression constante dans le foisonneur. Dans ce cas, un capteur de la pression du mélange dans le foisonneur est installé.

D'autres particularités et avantages de l'invention ressortiront encore de la description ci-après, relative à un exemple.

Aux dessins annexés :
- la Figure 1 est une vue d'ensemble d'un dispositif selon l'invention, en représentation schématique, et
- la Figure 2 est une vue schématique en perspective d'un exemple de mélangeur statique convenant pour la mise en oeuvre du procédé selon l'invention.

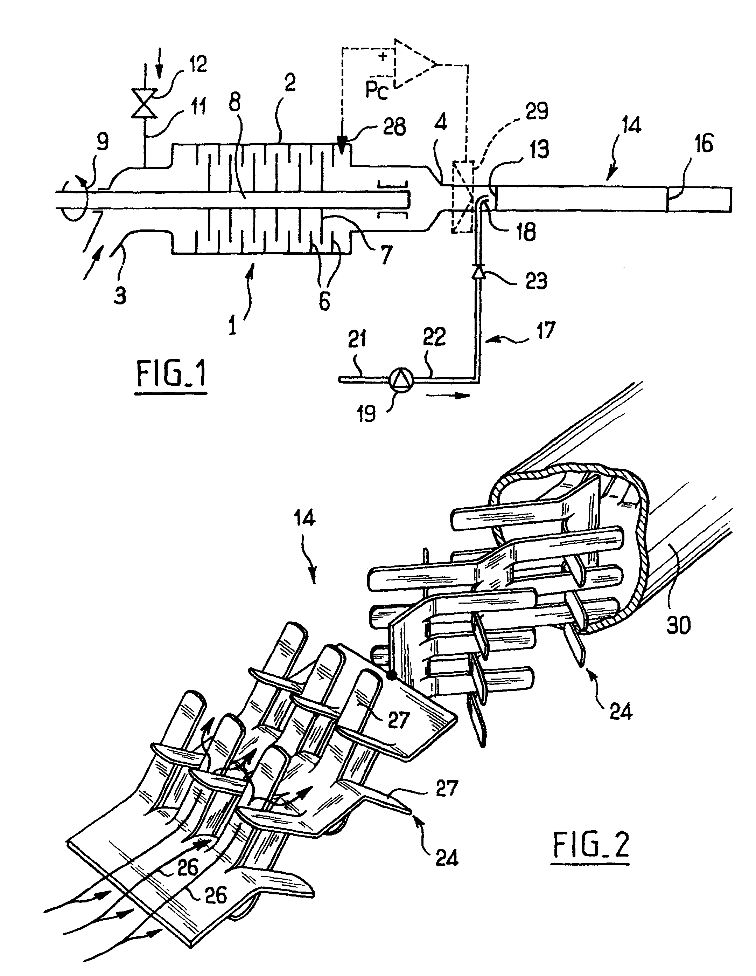

Dans l'exemple représenté à la figure 1, le dispositif comprend un foisonneur 1 pouvant être de construction classique avec un carter 2 définissant une entrée 3 pour le mélange à foisonner, raccordée par exemple à la sortie d'une installation de malaxage, et une sortie 4 pour le mélange foisonné. Le carter 2 présente des conformations statoriques intérieures 6 qui coopèrent avec des conformations rotoriques 7 portées par un arbre central 8. Un moteur dont l'action est illustrée par la flèche 9 est couplé en rotation avec l'arbre 8. A l'entrée 3 du foisonneur 1 est raccordée une tubulure d'injection d'air 11 raccordée à la sortie d'une source d'air comprimé (non-représentée) par l'intermédiaire d'un organe de réglage de débit massique 12. L'entrée 3 du foisonneur 1 est raccordée à la sortie d'une pompe doseuse, par exemple une pompe volumétrique. Un foisonneur de ce type est généralement connu et ne sera pas décrit avec plus de détail.

La sortie 4 du foisonneur 1 est raccordée à l'entrée 13 d'un mélangeur statique 14 dont la sortie 16 conduit la pâte à génoise, ou autre pâte foisonnée obtenue, vers un poste d'utilisation de la pâte, tel qu'un poste de dépose dans des moules de cuisson.

Un dispositif d'injection de matière grasse ajoutée 17 a un orifice de sortie 18 débouchant dans le trajet du mélange foisonné entre la sortie 4 du foisonneur 1 et l'entrée 13 du mélangeur statique 14. Le dispositif d'injection d'huile 17 comprend une pompe 19 dont l'entrée 21 est raccordée à une réserve d'huile non-représentée, et dont la sortie 22 conduit à l'orifice 18 par l'intermédiaire d'un clapet anti-retour 23 empêchant tout flux de l'orifice 18 vers la pompe 19. La pompe 19 est une pompe doseuse permettant de régler avec une précision suffisante le débit d'huile injecté en fonction du débit massique de mélange foisonné sortant du foisonneur 1.

On va maintenant décrire le fonctionnement du dispositif de la figure 1 et en même temps le procédé selon l'invention.

Un mélange contenant par exemple des oeufs, de la farine et du sucre, et éventuellement du sel, une poudre levante et un émulsifiant, arrive avec un débit déterminé à l'entrée 3 du foisonneur 1 sous une pression de quelques bars suffisante pour pousser le mélange à travers le foisonneur 1 et à travers le mélangeur statique 14 qui suit. Grâce au dispositif de réglage de débit 12, de l'air est ajouté au mélange à l'entrée du foisonneur 1 dans une proportion déterminée en fonction de la densité voulue pour la pâte foisonnée à la sortie du mélangeur statique 14. Le mélange arrivant à l'entrée 3 est dépourvu de matière grasse ajoutée. Autrement dit, il ne contient que la matière grasse faisant partie inhérente des autres ingrédients utilisés et notamment des oeufs.

La matière grasse ajoutée, injectée par le dispositif 17, peut avoir toute consistance souhaitée, notamment liquide, par exemple de l'huile de colza ou d'arachide, ou être plus pâteuse et avoir, par exemple, la consistance d'une pommade.

La matière grasse ajoutée doit avoir une consistance liquide ou pâteuse telle qu'elle puisse être pompable. Il est donc à noter que la matière grasse ajoutée ne se trouve pas dans un état pulvérulent.

La pâte foisonnée et la matière grasse ajoutée ont tendance à former en amont du mélangeur statique 14 des phases distinctes. Le mélangeur statique 14 a pour fonction de fractionner de nombreuses fois cet écoulement pour former de nombreux flux partiels qui sont recombinés entre eux, puis subdivisés à nouveau et ainsi de suite. On obtient ainsi à la sortie 16 du mélangeur statique 14 une pâte foisonnée dans laquelle la matière grasse ajoutée est sous forme de globules dont le diamètre est de préférence compris de 5 à 25µm.

On a illustré à la figure 2 un mélangeur statique 14 de type connu en soi, disponible dans le commerce auprès de la société SULZER sous la désignation "SMX". Ce mélangeur va être décrit pour la bonne compréhension du procédé et du dispositif selon l'invention mais ne constitue pas en tant que tel une innovation. Le mélangeur 14 comprend un corps tubulaire 30 formant enceinte extérieure et délimitant le volume réservé à l'écoulement. Des éléments successifs 24 sont disposés dans le corps tubulaire 30. Ces éléments 24 ont pour fonction de subdiviser le flux en de multiples flux partiels, de dévier ces flux partiels, et de recombiner ces flux partiels de telle manière que des veines d'écoulement qui étaient initialement voisines les unes des autres sont séparées alors que des veines initialement distantes sont au contraire amenées à converger et à se mélanger. On a illustré ce processus par quelques flèches 26 à la figure 2, dont chacune illustre schématiquement un flux partiel. Chaque élément 24 comporte des lames obliques 27 qui dévient les flux partiels dans deux directions opposées par rapport au plan axial. Les éléments 24 successifs sont tournés de 90° les uns par rapport aux autres autour de l'axe du corps tubulaire 30 de sorte que le plan axial précité est lui-même tourné de 90° d'un élément 24 au suivant.

Les éléments 24 sont fixés dans le corps tubulaire 23. L'énergie nécessaire pour assurer l'écoulement, le fractionnement en flux partiels, la déviation des flux partiels et leur recombinaison est fournie par la pression régnant en amont du mélangeur statique 14.

Dans un exemple de mise en oeuvre du procédé selon l'invention, pour un débit de 200kg/h, une densité de 650kg/m3, le corps tubulaire 23 a un diamètre intérieur de 50mm, la vitesse moyenne d'écoulement est donc de 4cm/s, chaque élément 24 a une longueur de 55mm et divise seize fois le flux. Il s'est avéré approprié d'utiliser onze éléments 24 successifs de façon à diviser le flux cent soixante-seize fois sur une longueur de mélange qui est de 600mm. Dans ces conditions, la pression nécessaire à l'entrée du mélangeur 14 est suffisamment basse pour ne pas dégrader la qualité de foisonnement du mélange. D'autre part les globules de matière grasse ajoutée ont à la sortie du mélangeur 14 la taille voulue, comprise entre 5 et 25µm. Le cisaillement, qui se calcule en divisant la vitesse de l'écoulement par le diamètre hydraulique, est alors de 50s⁻¹ dans le mélangeur statique.

Pour des débits différents, ou en fonction des caractéristiques du mélange foisonné et de la matière grasse ajoutée, notamment en ce qui concerne leurs viscosités respectives ainsi que leur comportement lorsqu'on les mélange, on peut raisonnablement envisager de faire varier la longueur de mélange du mélangeur entre 0,1 m et 2 m, à raison de 200 à 300 divisions du flux par mètre de longueur de mélange.

On a illustré en pointillés à la figure 1 la possibilité de prévoir une pompe de reprise 29 entre la sortie 4 du foisonneur 1 et l'orifice 18 d'injection d'huile. Un capteur de pression 28 mesurant la pression du mélange dans le foisonneur 1 influence par exemple la tension d'alimentation de la pompe 29 en fonction de la différence entre la pression mesurée et une consigne Pc affichée pour cette pression. La pompe est de préférence une pompe du type à deux rotors en forme de lobes, ou autre type produisant un cisaillement très réduit.

L'invention concerne également une pâte à gâteau cuite, avec matière grasse ajoutée, ayant la composition suivante :
- 2 % à 25 % d'eau,
- 20 % à 40 % de farine,
- 10 % à 35 % d'oeuf,
- 0 % à 45 % de sucre,
- 0 % à 45 % de sirop de glucose,
- 2 % à 20 % de matière grasse, notamment 5 % à 15 %,
- 0 % à 1 % de poudre levante,
- 0 % à 1 % d'émulsifiant,
- 0 % à 1 % de sel,
sous réserve que la quantité sucre + sirop de glucose soit de 15 % à 45 %, et possédant les caractéristiques suivantes :
- sa densité est inférieure à 300 g/l,
- la densité pour une composition déterminée est diminuée de 10 % à 40 %, notamment de 20 % à 30 %, par rapport à la densité d'une pâte fabriquée selon les procédés classiques et ayant la même susdite composition déterminée,
- elle présente une légèreté plus grande qu'une pâte de même composition mais préparée selon un procédé classique.

Par sucre, on entend notamment saccharose, lactose, dextrose, maltose, xylitol, maltitol, ou un mélange de ces sucres.

Par sirop de glucose, on désigne un mélange de sucres provenant de l'hydrolyse de l'amidon (Cf. "Guide technologique de la confiserie industrielle", par PH. Bryselbout et Y. Fabry, Tome 1, Edition SEPAIC, dépôt légal n° 5689)

Le sirop de glucose est utilisé sous forme liquide ou sous forme déshydratée et de préférence sous forme liquide.

Par poudre levante, on désigne les produits choisis parmi bicarbonate de soude, pyrophosphate acide de sodium. On peut utiliser également les poudres levantes à effet retard telle que la glucono-δ-lactone.

Par émulsifiant, on définit les produits choisis parmi les mono et diglycérides d'acides gras, sucroester, ester de diacétyl tartrique de mono et diglycéride, lécithine, ou esters de polyglycérol d'acides gras.

La pâte de l'invention présente une densité limite réduite d'au moins 10 % pour une composition déterminée, comparativement à une pâte préparée avec les mêmes ingrédients utilisés en même quantité, selon un procédé classique tel que celui décrit dans les exemples.

Par densité limite, on définit la densité minimale accessible par le procédé utilisé.

La diminution de la densité limite de la pâte de l'invention par rapport aux pâtes classiques est généralement de 10 % à 40 %, notamment de 20 % à 30 %.

S'agissant de la légèreté, elle se mesure par la densité du produit. Il s'agit d'une caractéristique normalisée qui peut être déterminée par un test d'analyse sensorielle (voir « Exemples »), en évaluant l'importance de la sensation de compacité, lourdeur et d'épaisseur du, produit.

L'invention a notamment pour objet une pâte à gâteau cuite, avec matière grasse ajoutée telle que définie ci-dessus et ayant les caractéristiques suivantes :
- elle est plus légère qu'une pâte de même composition mais préparée selon un procédé classique,
- elle est plus fondante qu'une pâte de même composition mais préparée selon un procédé classique.

Le fondant est une caractéristique normalisée qui correspond à l'évaluation du temps de passage d'un état solide à un état liquide ou semi-liquide, ou l'évaluation de la facilité à déglutir.

Cette caractéristique peut être déterminée par un test d'analyse sensorielle (voir « Exemples ») consistant, après mastication, à évaluer l'état du produit après salivation (liquide ou pâteux), et la facilité avec laquelle il peut être dégluti.

L'invention concerne toute pâte à gâteau cuite, avec matière grasse ajoutée telle qu'obtenue par le procédé selon l'invention et décrit ci-dessus.

Une pâte à gâteau cuite, avec matière grasse, selon l'invention contient avantageusement de 2 % à 15 % de matière grasse et ne contient pas d'émulsifiant.

Selon un autre mode de réalisation avantageux, une pâte à gâteau cuite avec matière grasse ajoutée selon l'invention, contient de 2 % à 15 % de matières grasses, de 0 % à 1 % d'émulsifiant et son fondant est amélioré.

Selon un autre mode de réalisation avantageux, une pâte à gâteau cuite, avec matière grasse ajoutée selon l'invention, contient moins de 10 % de matière grasse et de 0 % à 1 % d'émulsifiant.

L'invention concerne également une pâte crue (avant cuisson) pour la préparation de pâte à gâteau avec matière grasse ajoutée, ayant la composition suivante :
- 20 % à 40 % de farine,
- 10 % à 45 % d'oeuf,
- 0 % à 45 % de sucre,
- 0 % à 45 % de sirop de glucose, la quantité sucre + sirop de glucose étant de 15 % à 45 %,
- 2 % à 20 % de matière grasse, notamment de 5 % à 15 %,
- 0 % à 1 % de poudre levante,
- 0 % à 1 % d'émulsifiant,
- 0 % à 1 % de sel,
et présentant les caractéristiques suivantes :
- sa densité est de 400 à 800 g/l,
- le diamètre moyen des globules de matière grasse est de 5 µm à 25 µm.

La pâte crue est avantageusement préparée selon le procédé décrit ci-dessus.

Par pâte, on entend un mélange obtenu à partir d'une part d'ingrédients secs et notamment de farine, et d'autre part d'ingrédients liquides, notamment de l'eau ou d'ingrédients contenant de l'eau, notamment les oeufs, lequel mélange a subi un travail mécanique de pétrissage. Les ingrédients initialement secs tel que la farine sont hydratés par l'addition d'eau et il existe une phase continue aqueuse dans le mélange permettant la cohésion de l'ensemble.

La pâte crue contient de 20 à 50 % d'eau et notamment de 25 à 35 % d'eau.

La pâte crue selon l'invention se distingue de la pâte crue obtenue selon un procédé classique, notamment dans la mesure où le diamètre moyen des globules de matière grasse dans la pâte crue de l'invention est de 5 µm à 25 µm, tandis que le diamètre moyen des globules de matières grasses dans une pâte crue préparée par un procédé classique est de 1 µm à 5 µm.

La pâte crue selon l'invention présente en analyse granulométrique laser les caractéristiques suivantes :
- 90 % du volume des particules ont un diamètre inférieur à 60 µm,
- 70 % du volume des particules ont un diamètre supérieur à 10 µm,
- 50 % du volume des particules ont un diamètre supérieur à 16,8 µm et 50 % du volume des particules ont un diamètre inférieur à 16,8 µm.

Dans les particules, on mesure la matière grasse ajoutée, la matière grasse apportée par les oeufs et les grains d'amidon apportés par la farine. Avec un procédé standard, ces mesures sont décalées dans le sens suivant :
- 90 % du volume des particules ont un diamètre inférieur à 38,98 µm,
- 70 % du volume des particules ont un diamètre inférieur à 20 µm,
- 50 % du volume des particules ont un diamètre inférieur à 12 µm.

D'une manière générale, le procédé de l'invention permet d'aller dans le sens d'augmentation de la taille des particules de la matière grasse ajoutée.

### DESCRIPTION DES FIGURES :

- la Figure 1 est une vue d'ensemble d'un dispositif selon l'invention,
- la Figure 2 est une schématique en perspective d'un exemple de mélangeur statique,

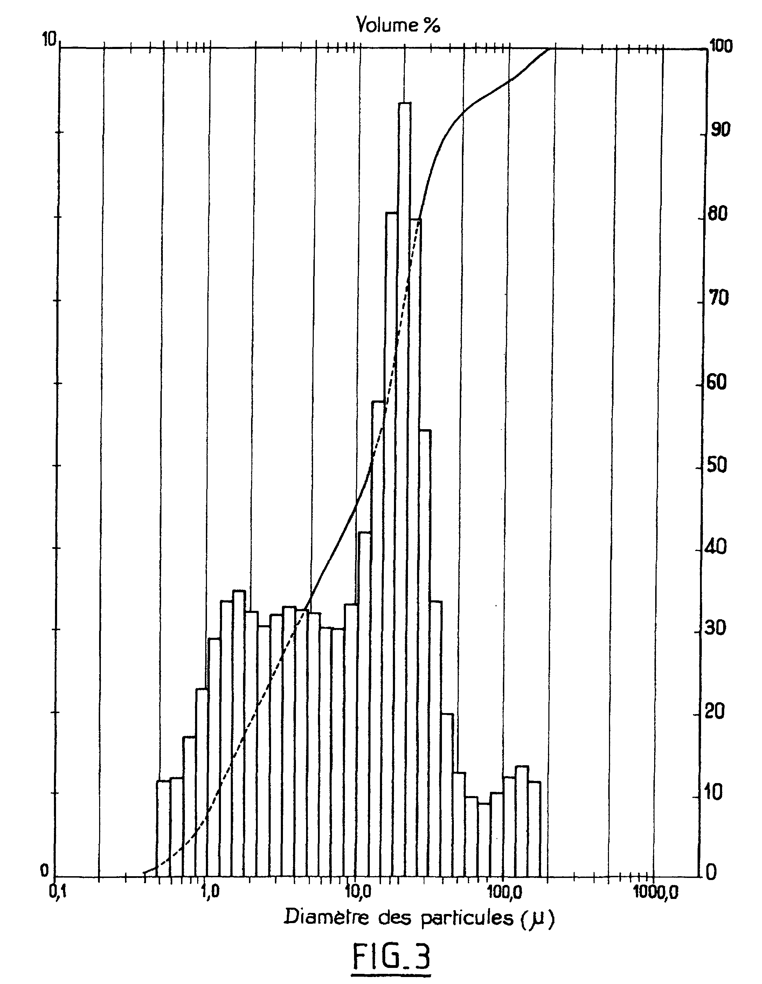

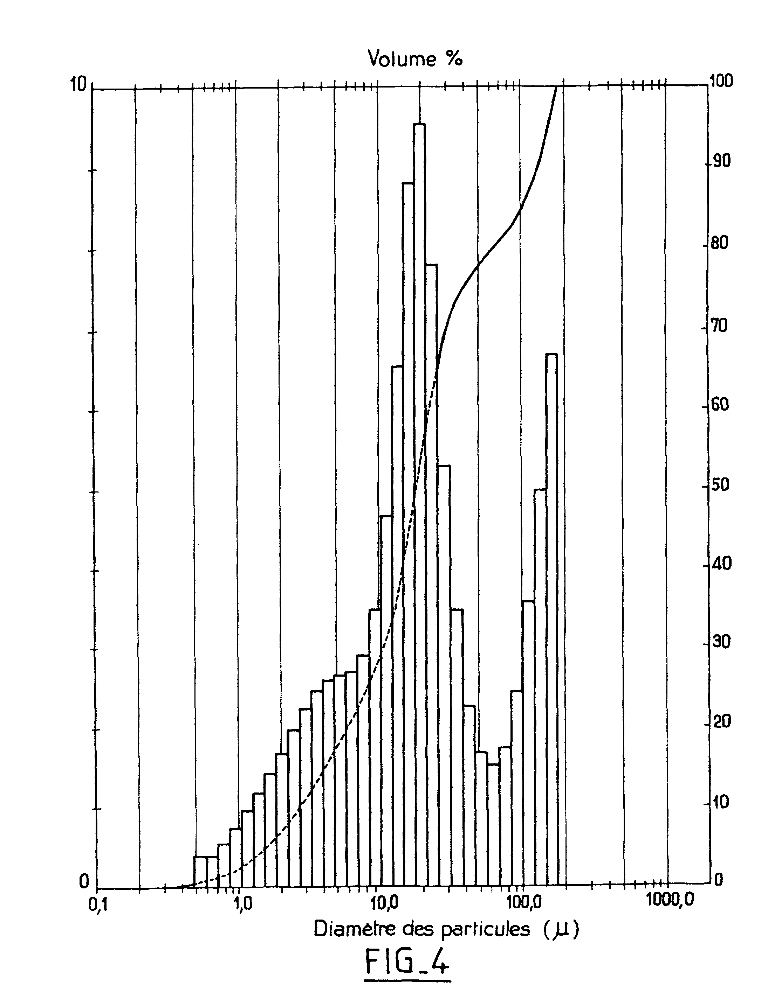

- les Figures 3 et 4 représentent les résultats de granulométrie laser ; en ordonnées on a indiqué le volume de particules de matière grasses en fonction du diamètre (abscisse) exprimé en µ ; la Figure 3 correspond à de la pâte crue préparée selon un standard ; la Figure 4 correspond à de la pâte crue obtenue selon le procédé de l'invention,

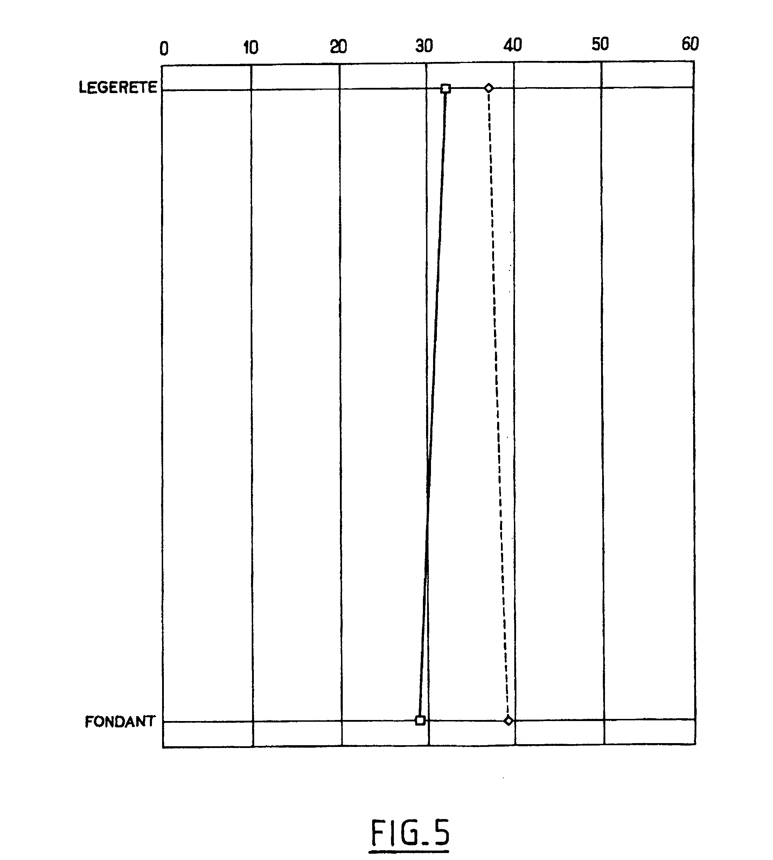

- la Figure 5 représente le profil linéaire multiple obtenu dans un test d'analyse sensorielle. La courbe en trait plein correspond à un produit à 5 % de matière grasse obtenu selon le procédé standard et celle en traits pointillés correspond à un produit à 5 % de matière grasse obtenu selon le procédé de l'invention.

### EXEMPLES :

### 1) Détail des essais :

Six essais ont été réalisés selon le tableau ci-après (Tableau 1).

On a comparé l'influence du procédé pour trois taux d'huile : 5 %, 10 % et 15 % d'huile par rapport à la pâte, respectivement en mettant en oeuvre un procédé classique et le procédé de l'invention (désigné par « procédé avec mélangeurs statiques »).

**Tableau 1**

| **Essais réalisés** | | |
|---|---|---|
| **Essai** | **% matières grasses** | **Procédé** |
| 1 | 5 % | Standard |
| 2 | | Avec mélangeurs statiques |
| 3 | 10 % | Standard |
| 4 | | Avec mélangeurs statiques |
| 5 | 15% | Standard |
| 6 | | Avec mélangeurs statiques |

Les essais ont été réalisés avec les trois formules figurant dans le tableau ci-après (Tableau 2) :

**Tableau 2**

| **Formules utilisées pour les essais** | | | |
|---|---|---|---|
| **Essais** | **1 et 2** | **3 et 4** | **5 et 6** |
| **Matières premières** | **%** | **%** | **%** |
| Farine | 36 | 34 | 32 |
| oeufs | 26 | 25 | 23,5 |
| Sucre | 25 | 23 | 22 |
| Sirop de glucose | 7 | 7 | 6,5 |
| Huile d'arachide | 5 | 10 | 15 |
| Poudre levante | 0,4 | 0,4 | 0,4 |
| Sel | 0,3 | 0,3 | 0,3 |
| Mono et diglycérides | 0,3 | 0,3 | 0,3 |
| **Total** | **100,00** | **100,00** | **100,00** |

### 2) Procédé standard - Essais 1, 3 et 5

### 2.1 Préparation de la pâte

On prépare la pâte destinée à être foisonnée en batch avec un batteur planétaire (Hobart) équipé d'une feuille. Le mélange se fait avec le protocole suivant (Tableau 3) :

**Tableau 3**

| **Prémélange de la pâte standard** | | |
|---|---|---|
| **Etape** | **Durée** | **Matière** |
| 1 | 1 minute Vitesse 1 | oeuf, sucre, sirop de glucose, sel |
| 2 | 1 minute Vitesse 1 | Huile |
| 3 | 5 minutes Vitesse 1 | farine, mono et diglycérides, poudres levantes |
| Température de la pâte : 18°C Vitesse 1 = 42 tpm. | | |

### 2.2 Foisonnement

La pâte précédemment préparée est foisonnée par un foisonneur continu (Minimondo de Mondomix). Les caractéristiques du procédé sont les suivantes :

| | |
|---|---|
| Débit | 20 kg/h |
| Vitesse de tête | 550 tpm |
| Pression interne | 3 Bars |
| Température pâte entrée | 18°C |
| Température pâte foisonnée | 24°C |
| Température refroidissement | 7°C |
| Densité pâte | 650 g/l |
| Densité limite essai 1 | 600 g/l |
| Densité limite essai 3 | 650 g/l |
| Densité limite essai 5 | 650 g/l |

### 2.3 Dépose et cuisson

La dépose se fait en bande sur papier sulfurisé, suivie d'une cuisson statique :

| | |
|---|---|
| Largeur dépose | 24 mm |
| Epaisseur dépose | 5 mm |
| Cuisson | 7 minutes à 200°C en four statique. |

### 3) Procédé selon l'invention - Essais 2, 4 et 6

### 3.1 Préparation de la pâte

On prépare la pâte destinée à être foisonnée en batch avec un batteur planétaire (Hobart), équipé d'une feuille. Le mélange se fait avec le protocole suivant (Tableau 4) :

**Tableau 4**

| **Prémélange de la pâte pour essais avec mélangeurs statiques** | | |
|---|---|---|
| **Etape** | **Durée** | **Matière** |
| 1 | 1 minute Vitesse 1 | oeuf, sucre, sirop de glucose, sel |
| 2 | 5 minutes Vitesse 1 | farine, mono et diglycérides, poudres levantes |
| Température de la pâte : 18°C Vitesse 1 = 42 tpm. | | |

L'huile n'est pas incorporée à la pâte car elle est mélangée après le foisonnement.

### 3.2 Foisonnement

La pâte précédemment préparée est foisonnée par un foisonneur continu (Minimondo de Mondomix). Après le foisonneur, on place dans le procédé une contre pression puis un injecteur pour l'huile, suivi des mélangeurs statiques. On règle le débit d'huile de manière à respecter le taux prévu par la formule.

Les caractéristiques du procédé sont les suivantes :

| | |
|---|---|
| Débit | 20 kg/h |
| Vitesse de tête | 550 tpm |
| Pression interne | 4 Bars |
| Température pâte entrée | 18°C |
| Température huile injectée | 22°C |
| Température pâte foisonnée | 24°C |
| Température refroidissement | 7°C |
| Densité pâte | 600 g/l |
| Densité limite essai 2 | 500 g/l |
| Densité limite essai 4 | 500 g/l |
| Densité limite essai 6 | 500 g/l |

### 3.3 Mélangeurs statiques

| | |
|---|---|
| Type | SMX de Sulzer |
| Diamètre | 20 mm |
| Longueur de mélange | 25 cm |
| Vitesse de conduite | 1,4 cm.s⁻¹ |

### 3.4 Dépose et cuisson

La dépose se fait en bande sur papier sulfurisé, suivie d'une cuisson statique :

| | |
|---|---|
| Largeur dépose | 24 mm |
| Epaisseur dépose | 5 mm |
| Cuisson | 7 minutes à 200°C en four statique |

### 4) Analyse des produits finis

On a mesuré la densité sur le produit fini pour mettre en évidence l'intérêt du procédé. Le procédé avec mélangeurs statiques permet d'atteindre une densité plus faible que le procédé standard avec une même formule (volume plus important) (Tableau 5).

**Tableau 5**

| **Résultats sur produits finis** | | | | | | |
|---|---|---|---|---|---|---|
| **Essais** | **1** | **2** | **3** | **4** | **5** | **6** |
| **% d'huile** | **5 %** | | **10 %** | | **5 %** | |
| **Procédé** | Standard | Invention | Standard | Invention | Standard | Invention |
| **Densité produit** | 0,218 | 0,169 | 0,272 | 0,163 | 0,247 | 0,191 |
| | ± 0,014 | ± 0,01 | ± 0,03 | ± 0,01 | ± 0,03 | ± 0,008 |

### 5) Résultats de granulométrie laser sur pâte foisonnée non cuite

### 5.1 Remarques sur la mesure

Les mesures en granulomètre laser sont influencées par plusieurs particules :
- la matière grasse ajoutée (huile),
- la matière grasse provenant des oeufs,
- les grains d'amidon provenant de la farine.

Entre les deux procédés, seule la matière grasse rajoutée (huile injectée) voit sa granulométrie changée.

Au niveau des analyses, les différences obtenues sont donc atténuées par l'enregistrement de la granulométrie oeuf + amidon.

### 5.2 Comparaison avec la microscopie

L'analyse en microscopie est plus adaptée mais ne donne pas de mesure parfaitement quantifiée.

On distingue facilement la matière grasse seule. Le diamètre des globules de matière grasse se situe dans une plage restreinte. Avec le procédé de l'invention : 5 à 25 µm ; avec un procédé standard : 1 à 5 µm.

Malgré l'atténuation de la mesure en granulométrie, les mesures sont suffisamment discriminantes pour distinguer la différence entre les deux procédés.

### 5.3 Analyse des résultats

Avec le procédé de l'invention, 50 % de la matière grasse possède un diamètre inférieur à 16,8 µm.

Avec le procédé standard, 50 % de la matière grasse possède un diamètre inférieur à 12,4 µm.

### 6) Analyse des courbes

### 6.1 Pic majoritaire

Les deux courbes possèdent un pic majoritaire à 20 µm environ. Il s'agit certainement de la matière grasse des oeufs qui subit le même foisonnement dans les deux cas. On retrouve une même population de globule de gras (même diamètre).

### 6.2 Pic à 100 µm

Avec le procédé de l'invention, un pic apparaît au-delà de 70 µm (dans les forts diamètres). Ce pic est beaucoup plus faible avec le procédé standard.

### 6.3 Population inférieure à 10 µm

En dessous de 10 µm, on trouve un pourcentage de matière grasse beaucoup plus important pour le procédé standard
procédé standard : pourcentage inférieur à 10 µm = 45,3 % ,
procédé de l'invention : pourcentage inférieur à 10 µm = 29,5 %.

### 7) Tests d'analyse sensorielle

Les tests d'analyse sensorielle ont été faits selon la norme AFNOR NF V09-015 de mai 1985.

Le but de l'étude est de comparer, à pourcentage de matière grasse égal, la texture des génoises obtenues avec deux procédés différents (procédé standard et procédé de l'invention).

Le pourcentage de matière grasse étudié est de 5 %.

Le laboratoire qui a effectué ce test est le Laboratoire Danone Biscuits / Service Analyse Sensorielle, dont le numéro d'accréditation est 1-99236.

### 7.1 Identification des échantillons

**Test 51T(A) - Maquette à 5 % de matière grasse :**

| | |
|---|---|
| - Maquette génoise Type Barquette Chocolat 5 % de matière grasse Procédé standard | - Maquette génoise Type Barquette Chocolat 5 % de matière grasse Procédé de l'invention |

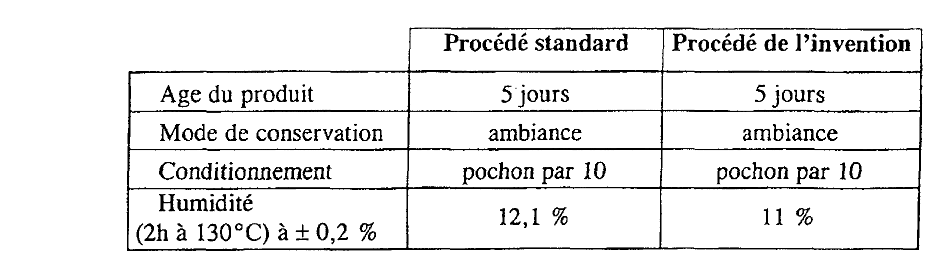

**Test 51T(B) - Maquette à 15 % de matière grasse :**

| | |
|---|---|
| - Maquette génoise Type Barquette Chocolat 15 % de matière grasse Procédé standard | - Maquette génoise Type Barquette Chocolat 15 % de matière grasse Procédé de l'invention |

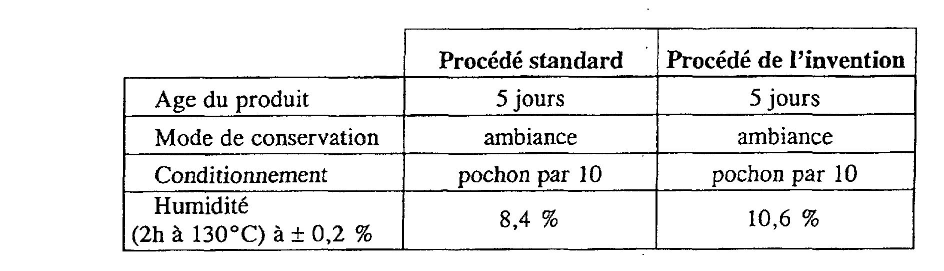

### 7.2 Méthode d'essai

Type de test réalisé : profil descriptif (norme AFNOR NF V09-015 de mai 1985).

### Normes et procédures de références :

NF V09-001 ― juillet 1983 ― Méthodologie / Directives générales,
NF V09-015 - Mai 1985 - Méthodologie / Méthodes utilisant des échelles et des catégories,
NF V09-016 - Juillet 1983 - Méthodologie / Méthodes d'établissement du profil de la flaveur,
PSEN 02.04 - Panels experts et Panels experts spécialisés,
PSEN 11.03 - Plan de sélection des jurys experts et experts spécialisés,
PSEN 11.02 - Plan d'entraînement des jurys.

Traitements réalisés sur les résultats : traitement comparatif / Test de Student en séries appariées.

Type de jury : Jury Expert Spécialisé Texture.

Nombre de dégustateurs : 15 personnes.

Description du protocole : les échantillons ont été présentés dans un ordre aléatoire et dégustés en comparatif, sous lumière blanche.

Nombre d'échantillons proposés par produit testé : une génoise par assiette.

Mode de prélèvement des échantillons : les échantillons sont issus de plusieurs paquets.

Protocole de rinçage : les juges ont eu à leur disposition de l'eau minérale à volonté.

### 7.3 Résultats

Comparaison des moyennes des produits avec 5 % de matière grasse :

| **Variable** | LEGÉRETÉ |
|---|---|
| Invention 5 % M.G. | (37.20) |
| Standard 5 % M.G. | (32.33) |

| **Variable** | FONDANT |
|---|---|
| Invention 5 % M.G. | (39.33) |
| Standard 5 % M.G. | (29.20) |

### 7.4 Conclusions

Quel que soit le pourcentage de matière grasse testé, l'utilisation du mélangeur statique selon l'invention a une influence importante sur les caractéristiques de texture des produits.

Test sur les produits à 5 % de matière grasse : le jury a perçu plusieurs différences significatives entre les deux échantillons à 5 % de matière grasse : l'essai (procédé de l'invention) est perçu significativement plus léger et plus fondant que le produit préparé par un procédé standard.

## Revendications

1. Procédé pour préparer en continu une pâte à gâteau foisonnée, avec matière grasse ajoutée, comprenant une étape de foisonnement appliquée à un mélange des ingrédients de la pâte, **caractérisé en ce qu'**après l'étape de foisonnement on procède à une étape d'intégration de la matière grasse ajoutée, la matière grasse étant ajoutée en quantité inférieure à 15 %, et notamment inférieure ou égale à 10 %, et plus particulièrement de 2 à 10 %, et notamment de 2 à 8 %.

2. Procédé selon la revendication 1, **caractérisé par** l'absence de matière grasse ajoutée dans ledit mélange au moment où on lui applique le foisonnement.

3. Procédé selon la revendication 1 ou 2, **caractérisé en ce qu'**on intègre la matière grasse par une étape de mélange impliquant un cisaillement très inférieur à celui impliqué par l'étape de foisonnement.

4. Procédé selon l'une des revendications 1 à 3, **caractérisé en ce que** le cisaillement impliqué par l'étape d'intégration de la matière grasse ajoutée est compris entre 20s⁻¹ et 100s⁻¹.

5. Procédé selon l'une des revendications 1 à 3, **caractérisé en ce que** le cisaillement impliqué par l'étape d'intégration de la matière grasse ajoutée est égal à 50 s⁻¹.

6. Procédé selon l'une des revendications 1 à 4, **caractérisé en ce que** l'étape d'intégration de la matière grasse ajoutée utilise un mélangeur statique (14).

7. Procédé selon la revendication 6, **caractérisé en ce qu'**on fait progresser le mélange foisonné et la matière grasse à une vitesse comprise entre 0,5 et 20cm/s à travers le mélangeur statique (14).

8. Procédé selon la revendication 6, **caractérisé en ce qu'**on fait progresser le mélange foisonné et la matière grasse à une vitesse comprise entre 3 et 5 cm/s à travers le mélangeur statique (14).

9. Procédé selon l'une des revendications 6 à 8, **caractérisé en ce que** pour un mélangeur statique ayant un diamètre intérieur de 50mm, on soumet le flux à l'action d'éléments (24) définissant 20 à 300 divisions.

10. Procédé selon l'une des revendications 6 à 8, **caractérisé en ce que** pour un mélangeur statique ayant un diamètre intérieur de 50mm, on soumet le flux à l'action d'éléments (24) définissant 100 à 200 divisions.

11. Procédé selon l'une des revendications 1 à 10, **caractérisé par** l'absence d'émulsifiants dans ledit mélange.

12. Procédé selon l'une des revendications 1 à 11, **caractérisé en ce que** l'étape d'intégration de la matière grasse ajoutée est menée de façon à obtenir à l'issue de cette étape des globules de matière grasse ayant un diamètre compris de 5 à 25 µm.

13. Procédé selon l'une des revendications 1 à 12, **caractérisé en ce que** la quantité de matière grasse ajoutée est comprise de 2 à 20 % du poids total de la pâte crue issue de l'étape d'intégration.

14. Procédé selon l'une des revendications 1 à 13, **caractérisé en ce que** la quantité de matière grasse ajoutée est comprise de 5 à 10% du poids total de la pâte crue issue de l'étape d'intégration.

15. Procédé selon l'une des revendications 1 à 14, **caractérisé en ce qu'**au cours de l'étape de foisonnement on règle l'aération de façon que la densité de la pâte crue obtenue après l'étape d'intégration soit comprise de 400 à 800 kg/m³.

16. Dispositif pour la fabrication d'une pâte à gâteau foisonnée par mise en oeuvre du procédé selon l'une des revendications 1 à 15, comprenant un foisonneur (1) monté entre une entrée de mélange (3) et une sortie de pâte crue (16), **caractérisé en ce qu'**il comprend un mélangeur à cisaillement modéré (14) monté en aval du foisonneur (1), et un dispositif d'injection de matière grasse (17) débouchant entre le foisonneur (1) et le mélangeur (14).

17. Dispositif selon la revendication 16, **caractérisé en ce que** le mélangeur est de type statique.

18. Dispositif selon la revendication 17, **caractérisé en ce que** le mélangeur statique (14) est conçu pour former 20 à 300 divisions, de préférence 100 à 200 divisions du flux entre l'entrée (13) et la sortie (16) du mélangeur (14).

19. Dispositif selon la revendication 17 ou 18, **caractérisé en ce que** le mélangeur (14) est conçu pour former 200 à 300 divisions du flux par mètre de longueur et présente une longueur de mélange de 0,1 à 1m.

20. Dispositif selon l'une des revendications 17 à 19, **caractérisé en ce que** le mélangeur (14) a un diamètre de 50 mm et définit une longueur de mélange qui est de 600mm.

21. Dispositif selon l'une des revendications 17 à 20, **caractérisé en ce que** le mélangeur (14) comprend dans le trajet de la pâte des éléments (24) qui subdivisent le flux de pâté en flux partiels, font diverger des flux partiels voisins, et recombinent des flux partiels initialement distants l'un de l'autre.

22. Dispositif selon l'une des revendications 17 à 21, **caractérisé par** une pompe de reprise (29) entre le foisonneur (1) et le mélangeur statique (14).

23. Pâte à gâteau cuite, avec matière grasse ajoutée, ayant la composition suivante :
- 2 % à 25 % d'eau,
- 10 % à 40 % de farine,
- 12 % à 35 % d'oeuf,
- 0 % à 45 % de sucre,
- 0 % à 45 % de sirop de glucose,
- 2 % à 10 % de matière grasse, notamment 2 % à 8 %,
- 0 % à 1 % de poudre levante,
- 0 % à 1 % d'émulsifiant,
- 0 % à 1 % de sel,
sous réserve que la quantité sucre + sirop de glucose soit de 15 % à 45 %,
et présentant les caractéristiques suivantes :
- sa densité est inférieure à 300 g/l,
- la densité pour une composition déterminée est diminuée de 10 % à 40 %, notamment de 20 % à 30 %, par rapport à la densité d'une pâte fabriquée selon les procédés classiques et ayant la même susdite composition déterminée,

24. Pâte à gâteau cuite, avec matière grasse ajoutée, telle qu'obtenue par le procédé selon l'une quelconque des revendications 1à15.

25. Pâte à gâteau cuite, avec matière grasse ajoutée, selon l'une des revendications 23 ou 24, dans laquelle le taux de matière grasse est de 2 % à 15 %, notamment de 2 à 10 %, et ne contenant pas d'émulsifiants.

26. Pâte à gâteau cuite, avec matière grasse ajoutée, selon l'une des revendications 23 ou 24, dans laquelle le taux de matières grasses est de 2 % à 15 %, notamment de 2 à 10 %, contenant de 0 % à 1 % d'émulsifiant et dont le fondant est amélioré.

27. Pâte à gâteau, avec matière grasse ajoutée, selon l'une des revendications 23 ou 24, dans laquelle le taux de matière grasse est inférieur à 10 % et contenant de 0 % à 1 % d'émulsifiant.

28. Pâte crue (avant cuisson) pour la préparation de pâte à gâteau avec matière grasse ajoutée, ayant la composition suivante :
- 20 % à 40 % de farine,
- 10 % à 45 % d'oeuf,
- 0 % à 45 % de sucre,
- 20 % à 50 % d'eau, et notamment de 25 % à 35 % d'eau,
- 0 % à 45 % de sirop de glucose, la quantité sucre + sirop de glucose étant de 15 % à 45 %,
- 2 % à 10 % de matière grasse, notamment de 2 % à 8 %,
- 0 % à 1 % de poudre levante,
- 0 % à 1 % d'émulsifiant,
- 0 % à 1 % de sel,
et présentant les caractéristiques suivantes :
- sa densité est de 400 à 800 g/l
- le diamètre moyen des globules de matière grasse est de 5 µm à 25 µm.

29. Pâte crue pour la préparation de pâte à gâteau cuite avec matière grasse ajoutée selon la revendication 28, ayant les caractéristiques suivantes en analyse granulométrique laser :
- 90 % du volume des particules ont un diamètre inférieur à 60 µm,
- 70 % du volume des particules on un diamètre supérieur à 10 µm,
- 50 % du volume des particules ont un diamètre supérieur à 16,8 µm et 50 % du volume des particules ont un diamètre inférieur à 16,8 µm.

## Patentansprüche

1. Verfahren zur kontinuierlichen Herstellung eines aufgeschlagenen Kuchenteigs unter Hinzufügung von Fett, mit einem auf eine Mischung der Bestandteile des Teigs angewandten Schritt des Aufschlagens, **dadurch gekennzeichnet, dass** nach dem Schritt des Aufschlagens ein Schritt des Untermengens des hinzugefügten Fetts stattfindet, wobei das Fett in einer Menge von weniger als 15%, und insbesondere weniger als oder gleich 10% und besonders vornehmlich von 2 bis 10% und insbesondere von 2 bis 8% hinzugefügt wird.

2. Verfahren nach Anspruch 1, **gekennzeichnet durch** das Fehlen von Fett in der Mischung zu dem Zeitpunkt, in dem sie aufgeschlagen wird.

3. Verfahren nach Anspruch 1 oder 2, **dadurch gekennzeichnet, dass** das Fett in einem Mischschritt untergemengt wird, der eine Scherbeanspruchung umfasst, die sehr viel geringer ist, als die beim Aufschlagen auftretende.

4. Verfahren nach einem der Ansprüche 1 bis 3, **dadurch gekennzeichnet, dass** die Scherbeanspruchung während des Schritts des Untermengens des hinzugefügten Fetts zwischen 20s⁻¹ und 100s⁻¹ liegt.

5. Verfahren nach einem der Ansprüche 1 bis 3, **dadurch gekennzeichnet, dass** die Scherbeanspruchung während des Schritts des Untermengens des hinzugegebenen Fetts gleich 50s⁻¹ ist.

6. Verfahren nach einem der Ansprüche 1 bis 4, **dadurch gekennzeichnet, dass** für den Schritt des Untermengens des hinzugefügten Fetts ein statischer Mischer (14) verwendet wird.

7. Verfahren nach Anspruch 6, **dadurch gekennzeichnet, dass** das Vorrücken der aufgeschlagenen Mischung und des Fetts durch den statischen Mischer (14) bei einer Geschwindigkeit zwischen 0,5 und 20 cm/s erfolgt.

8. Verfahren nach Anspruch 6, **dadurch gekennzeichnet, dass** das Vorrücken der aufgeschlagenen Mischung und des Fetts durch den statischen Mischer (14) bei einer Geschwindigkeit zwischen 3 und 5 cm/s erfolgt.

9. Verfahren nach einem der Ansprüche 6 bis 8, **dadurch gekennzeichnet, dass** bei einem statischen Mischer mit einem Innendurchmesser von 50 mm der Durchfluss von Elementen (24) bearbeitet wird, welche 20 bis 300 Stücke abteilen.

10. Verfahren nach einem der Ansprüche 6 bis 8, **dadurch gekennzeichnet, dass** bei einem statischen Mischer mit einem Innendurchmesser von 50 mm der Durchfluss von Elementen (24) bearbeitet wird, welche 100 bis 200 Stücke abteilen.

11. Verfahren nach einem der Ansprüche 1 bis 10, **gekennzeichnet durch** das Fehlen von Emulgatoren in der Mischung.

12. Verfahren nach einem der Ansprüche 1 bis 11, **dadurch gekennzeichnet, dass** der Schritt des Untermengens des hinzugefügten Fetts so durchgeführt wird, dass am Ende des Schritts Fettkügelchen mit einen Durchmesser von 5 bis 25 µm erhalten werden.

13. Verfahren nach einem der Ansprüche 1 bis 12, **dadurch gekennzeichnet, dass** die Menge des hinzugefügten Fetts nach dem Schritt des Untermengens von 2 bis 20% des Gesamtgewichts des Rohteigs liegt.

14. Verfahren nach einem der Ansprüche 1 bis 13, **dadurch gekennzeichnet, dass** die Menge des hinzugefügten Fetts nach dem Schritt des Untermengens von 5 bis 10% des Gesamtgewichts des Rohteigs liegt.

15. Verfahren nach einem der Ansprüche 1 bis 14, **dadurch gekennzeichnet, dass** während des Aufschlagschritts die Luftzufuhr so geregelt wird, dass die Dichte des nach dem Aufschlagschritt erhaltenen Rohteigs 400 bis 800 kg/m³ ist.

16. Vorrichtung zur Herstellung eines aufgeschlagenen Kuchenteigs durch Anwendung des Verfahrens nach einem der Ansprüche 1 bis 15, mit einer zwischen einem Mischungseingang (3) und einem Rohteigausgang (16) angebrachten Aufschlageinrichtung (1), **dadurch gekennzeichnet, dass** die Vorrichtung einen von der Aufschlageinrichtung (1) nachgeschalteten Mischer mit mäßiger Scherbeanspruchung (14) und eine Vorrichtung zum Einspritzen von Fett (17) umfasst, welche zwischen der Aufschlageinrichtung (1) und dem Mischer (14) mündet.

17. Vorrichtung nach Anspruch 16, **dadurch gekennzeichnet, dass** der Mischer ein statischer Mischer ist.

18. Vorrichtung nach Anspruch 17, **dadurch gekennzeichnet, dass** der statische Mischer (14) zur Bildung von 20 bis 300 Stücken, bevorzugt 100 bis 200 Stücken des Durchflusses zwischen dem Eingang (13) und dem Ausgang (16) des Mischers (14) ausgelegt ist.

19. Vorrichtung nach Anspruch 17 oder 18, **dadurch gekennzeichnet, dass** der statische Mischer (14) zur Bildung von 200 bis 300 Stücken des Durchflusses pro Meter Länge ausgelegt ist, und eine Mischungslänge von 0,1 bis 1 m aufweist.

20. Vorrichtung nach einem der Ansprüche 17 bis 19, **dadurch gekennzeichnet, dass** der Mischer (14) einen Durchmesser von 50 mm hat, und eine Länge der Mischung von 600 mm definiert.

21. Vorrichtung nach einem der Ansprüche 17 bis 20, **dadurch gekennzeichnet, dass** der Mischer (14) auf dem Weg des Teigs Elemente (24) umfasst, welche den Teigdurchfluss in Durchflussteile aufteilen, die benachbarten Durchflussteile trennen und anfänglich entfernte Durchflussteile miteinander wieder verbinden.

22. Vorrichtung nach einem der Ansprüche 17 bis 21, **gekennzeichnet durch** eine Beschleunigungspumpe (29) zwischen der Aufschlageinrichtung (1) und dem statischen Mischer (14).

23. Gebackener Kuchenteig mit hinzugegefügtem Fett, mit folgender Zusammensetzung:
- 2% bis 25% Wasser,
- 10% bis 40% Mehl,
- 12% bis 35% Eier,
- 0% bis 45% Zucker,
- 0% bis 45% Glukosesirup,
- 2% bis 10% Fett, insbesondere 2% bis 8%,
- 0% bis 1% Backpulver,
- 0% bis 1% Emulgator,
- 0% bis 1% Salz,
unter der Bedingung, das die Menge an Zucker + Glukosesirup 15% bis 45% ist, und folgenden Eigenschaften:
- seine Dichte ist niedriger als 300 g/l,
- die Dichte einer festgelegten Zusammensetzung ist, im Vergleich zur Dichte eines nach den herkömmlichen Verfahren hergestellten Teigs mit der gleichen oben genannten Zusammensetzung, um 10% bis 40%, insbesondere 20% bis 30% geringer.

24. Gebackener Kuchenteig mit hinzugefügtem Fett, welcher gemäß dem Verfahren nach einem der Ansprüche 1 bis 15 erhalten wird.

25. Gebackener Kuchenteig mit hinzugefügtem Fett nach einem der Ansprüche 23 oder 24, in dem der Fettanteil 2% bis 15%, insbesondere 2% bis 10% beträgt, und keine Emulgatoren enthalten sind.

26. Gebackener Kuchenteig mit hinzugefügtem Fett nach einem der Ansprüche 23 oder 24, in dem der Fettanteil 2% bis 15%, insbesondere 2% bis 10% beträgt, welcher 0% bis 1% Emulgator enthält und dessen Schmelz verbessert ist.

27. Kuchenteig mit hinzugefügtem Fett, nach einem der Ansprüche 23 oder 24, in dem der Fettanteil kleiner als 10% ist und 0% bis 1% Emulgator enthalten ist.

28. Rohteig (vor dem Backen) zur Herstellung von Kuchenteig mit hinzugefügtem Fett, mit folgender Zusammensetzung:
- 20% bis 40% Mehl,
- 10% bis 45% Eier,
- 0% bis 45% Zucker,
- 20% bis 50% Wasser, insbesondere 25% bis 35% Wasser,
- 0% bis 45% Glukosesirup, wobei die Menge an Zucker + Glukosesirup 15% bis 45% ist,
- 2% bis 10% Fett, insbesondere 2% bis 8%,
- 0% bis 1% Backpulver,
- 0% bis 1% Emulgator,
- 0% bis 1% Salz,
und folgenden Eigenschaften:
- seine Dichte ist 400 bis 800 g/l,
- der mittlere Durchmesser der Fettkügelchen ist 5 µm bis 25µm.

29. Rohteig zur Herstellung von gebackenem Kuchenteig mit hinzugefügtem Fett nach Anspruch 28, welcher die folgenden Eigenschaften in der Laser-Korngrößenanalyse hat:
- 90% des Partikelvolumens haben einen Durchmesser von weniger als 60 µm,
- 70% des Partikelvolumens haben einen Durchmesser von mehr als 10 µm,
- 50% des Partikelvolumens haben einen Durchmesser von mehr als 16,8 µm und 50% des Partikelvolumens haben einen Durchmesser von weniger als 16,8 µm.

## Claims

1. Method for continuously preparing an expanded cake dough with added fat, comprising an expansion stage applied to a mixture of the dough ingredients, **characterized in that** the expansion stage is followed by an added fat integration stage, the fat being added in a quantity below 15% and in particular below or equal to 10% and more particularly from 2 to 10% and in particular from 2 to 8%.

2. Method according to claim 1, **characterized by** the absence of added fat from said mixture at the time when it is subjected to expansion.

3. Method according to claim 1 or 2, **characterized in that** the fat is integrated by a mixing stage involving a shear much lower than that involved by the expansion stage.

4. Method according to one of claims 1 to 3, **characterized in that** the shear involved by the added fat integration stage is comprised between 20 s⁻¹ and 100 s⁻¹.

5. Method according to one of claims 1 to 3, **characterized in that** the shear involved by the added fat integration stage is equal to 50 s⁻¹.

6. Method according to one of claims 1 to 4, **characterized in that** the added fat integration stage uses a static mixer (14).

7. Method according to claim 6, **characterized in that** the expanded mixture and the fat are progressed at a rate comprised between 0.5 and 20 cm/s through the static mixer (14).

8. Method according to claim 6, **characterized in that** the expanded mixture and the fat are progressed at a rate comprised between 3 and 5 cm/s through the static mixer (14).

9. Method according to one of claims 6 to 8, **characterized in that** for a static mixer having an internal diameter of 50 mm, the flow is subjected to the action of elements (24) defining 20 to 300 divisions.

10. Method according to one of claims 6 to 8, **characterized in that** for a static mixer having an internal diameter of 50 mm, the flow is subjected to the action of elements (24) defining 100 to 200 divisions.

11. Method according to one of claims 1 to 10, **characterized by** the absence of emulsifiers in said mixture.

12. Method according to one of claims 1 to 11, **characterized in that** the added fat integration stage is carried out in order to obtain, at the end of this stage, fat globules having a diameter comprised from 5 to 25 µm.

13. Method according to one of claims 1 to 12, **characterized in that** the quantity of added fat is comprised from 2 to 20% of the total weight of the raw dough resulting from the integration stage.

14. Method according to one of claims 1 to 13, **characterized in that** the quantity of added fat is comprised from 5 to 10% of the total weight of the raw dough resulting from the integration stage.

15. Method according to one of claims 1 to 14, **characterized in that** during the expansion stage, the aeration is controlled in such a fashion that the density of the raw dough obtained after the integration stage is comprised from 400 to 800 kg/m³.

16. Device for the production of an expanded cake dough for implementation of the method according to one of claims 1 to 15, comprising an expander (1) mounted between a mixture inlet (3) and a raw dough outlet (16), **characterized in that** it comprises a mixer with moderate shear (14) mounted upstream of the expander (1) and a fat injection device (17) opening up between the expander (1) and the mixer (14).

17. Device according to claim 16, **characterized in that** the mixer is of static type.

18. Device according to claim 17, **characterized in that** the static mixer (14) is designed to form 20 to 300 divisions, preferably 100 to 200 divisions of the flow between the inlet (13) and the outlet (16) of the mixer (14).

19. Device according to claim 17 or 18, **characterized in that** the mixer (14) is designed to form 200 to 300 divisions of the flow per metre of length and has a mixture length of 0.1 to 1 m.

20. Device according to one of claims 17 to 19, **characterized in that** the mixer (14) has a diameter of 50 mm and defines a mixing length of 600 mm.

21. Device according to one of claims 17 to 20, **characterized in that** the mixer (14) comprises, in the path of the dough, elements (24) which subdivide the flow of dough into partial flows, cause adjacent partial flows to diverge and recombine partial flows initially distant from one another.

22. Device according to one of claims 17 to 21, **characterized by** an accelerator pump (29) between the expander (1) and the static mixer (14).

23. Baked cake dough, with added fat, having the following composition:
- 2% to 25% of water,
- 10% to 40% of flour,
- 12% to 35% of egg,
- 0% to 45% of sugar,
- 0% to 45% of glucose syrup,
- 2% to 10% of fat, in particular 2% to 8%,
- 0% to 1% of baking powder,
- 0% to 1% of emulsifier,
- 0% to 1% of salt,
providing that the quantity of sugar + glucose syrup is from 15% to 45%,
and having the following characteristics:
- its density is below 300 g/l,
- the density for a specific composition is reduced by from 10% to 40%, in particular from 20% to 30% with respect to the density of a dough produced according to the standard methods and having the same abovementioned specific composition.

24. Baked cake dough, with added fat, as obtained by the method according to any one of claims 1 to 15.

25. Baked cake dough, with added fat, according to one of claims 23 or 24, in which the fat content is from 2% to 15%, in particular from 2% to 10%, and containing no emulsifiers.

26. Baked cake dough, with added fat, according to one of claims 23 or 24, in which the fat content is from 2% to 15%, in particular from 2 to 10%, containing from 0% to 1% of emulsifier, and the meltability of which is improved.

27. Cake dough, with added fat, according to one of claims 23 or 24, in which the fat content is below 10% and containing from 0% to 1% of emulsifier.

28. Raw dough (before baking) for the preparation of cake dough with added fat, having the following composition:
- 20% to 40% of flour,
- 10% to 45% of egg,
- 0% to 45% of sugar,
- 20% to 50% of water, and in particular from 25% to 35% of water,
- 0% to 45% of glucose syrup, the quantity of sugar + glucose syrup being from 15% to 45%,
- 2% to 10% of fat, in particular 2% to 8%,
- 0% to 1% of baking powder,
- 0% to 1% of emulsifier,
- 0% to 1% of salt,
and having the following characteristics:
- its density is from 400 to 800 g/l,
- the average diameter of the fat globules is from 5 µm to 25 µm.

29. Raw dough for the preparation of cake dough with added fat according to claim 28, having the following characteristics in laser granulometric analysis:
- 90% of the volume of the particles have a diameter below 60 µm,
- 70% of the volume of the particles have a diameter above 10 µm,
- 50% of the volume of the particles have a diameter above 16.8 µm, and 50% of the volume of the particles have a diameter below 16.8 µm.
